# EUROPÄISCHE PATENTSCHRIFT

(11) **EP 1 760 436 B1**
(45) Veröffentlichungstag und Bekanntmachung des Hinweises auf die Patenterteilung: **18.11.2015**
(21) Anmeldenummer: 06018240.9
(22) Anmeldetag: 31.08.2006
(51) Int. Cl.: G01F 1/66, G01F 15/14, G01F 15/18

(54) **Ultraschalldurchflussmessgerät**
Ultrasonic flowmeter
Débitmètre à ultrasons

(30) Priorität: 31.08.2005 DE 102005041288
(43) Veröffentlichungstag der Anmeldung: 07.03.2007
(73) Patentinhaber: GEMÜ Gebr. Müller Apparatebau GmbH & Co. Kommanditgesellschaft, 74653 Ingelfingen (DE)
(72) Erfinder: Müller, Fritz, 74653 Ingelfingen (DE); Deutscher, Martin, 79241 Ihringen (DE)
(74) Vertreter: DREISS Patentanwälte PartG mbB

(56) Entgegenhaltungen:
- EP-A- 0 681 162
- WO-A-94/04890
- DE-A1- 19 652 655
- GB-A- 2 282 223
- GB-A- 2 299 860
- US-A- 5 179 862

## Beschreibung

Die Erfindung betrifft ein Durchflussmessgerät zum Messen einer Strömungsgeschwindigkeit und daraus resultierend die Durchflussmenge von in einer Rohrleitung fließenden Medien.

Es sind Durchflussmessgeräte bekannt, bei welchen zur Messung Ultraschallwandler eingesetzt werden. Die Ultraschallwandler sind seitlich am Messrohr als Sende/Empfangseinheit ausgebildet und man lässt gesendete Ultraschallstrahlen abwechselnd in zwei Richtungen, in der Strömungsrichtung und gegen die Strömungsrichtung, schräg durch das in einem Messrohr fließende Medium hindurchtreten, um die sich aus der Strömungsgeschwindigkeit ergebende Laufzeitänderung des Ultraschalistrahls zu messen.

Es hat sich herausgestellt, dass bessere Messergebnisse erzielt werden können, wenn die Ultraschallwandler an den Stirnseiten des Messrohrs angeordnet sind, da dabei unnötige Reflexionen der Ultraschallstrahlen vermieden werden. Dabei gibt es jedoch Probleme in Bezug auf die Ein- und Auskopplung des Mediums, dessen Strömungsgeschwindigkeit gemessen werden soll, in das und aus dem Messrohr. Da die Stirnseiten des Messrohrs durch die Ultraschallwandler belegt sind, muss die Ein- und Auskopplung des Mediums seitlich am Messrohr erfolgen. Es gibt bereits Durchflussmessgeräte, bei welchen die Anschlussrohre für eine Ein- und Auskopplung des Mediums senkrecht zum Messrohr so angeordnet sind, dass sich insgesamt ein U-förmiger oder Z-förmiger Aufbau des Durchflussmessgeräts ergibt.

Bei einem derartigen Aufbau können durch die stirnseitige Anordnung von Ultraschallwandlern gute Messergebnisse erzielt werden. Jedoch wird durch die Anordnung der Anschlussrohre senkrecht zum Messrohr ein Anschließen des Durchflussmessgeräts an eine Rohrleitung erschwert.

Aus der EP 0 681 162 A1 ist ein Durchflussmessgerät bekannt geworden, bei welchem die Ultraschallwandler stirnseitig am Messrohr angeordnet sind und welches aus zwei Halbschalen besteht. Diese sind in der Längsmittelebene miteinander verschweißt.

Der Erfindung liegt somit die Aufgabe zugrunde, ein Durchflussmessgerät zur Verfügung zu stellen, mit welchen gute Messergebnisse erzielbar sind, welches auf einfache Weise an eine Rohrleitung angeschlossen werden kann und welches einfach herstellbar ist.

Diese Aufgabe wird erfindungsgemäß durch das im Anspruch 1 angegebene Durchflussmessgerät gelöst. Die Unteransprüche zeigen spezielle Ausführungsformen des erfindungsgemäßen Durchflussmessgeräts.

Das erfindungsgemäße Durchflussmessgerät zum Messen der Strömungsgeschwindigkeit von in einer Rohrleitung fließenden Medien weist ein Messrohr mit jeweils stirnseitig vorgesehenen Ultraschallwandlern und Anschlussrohre zur Integration des Durchflussmessgeräts an die und axial zur Rohrleitung auf.

Durch das erfindungsgemäße Anordnen der Anschlussrohe des Durchflussmessgeräts mit einem Messrohr mit jeweils stirnseitig vorgesehenen Ultraschallwandlern derart, dass sie axial zur Rohrleitung angeordnet sind, kann das Anschließen des Durchflussmessgeräts über die Anschlussrohre in gerader Linie zur Rohrleitung erfolgen.

Der Strömungsweg für das Medium bei der Verbindung zwischen den Anschlussrohren und der Rohrleitung ist begradigt, so dass an dieser Stelle eine Störung des Flusses vermieden wird. Ein Kv-Wert, der ein Maß für den Durchfluss in m³/h Wasser bei +5 bis +30°C ist, der bei einem Druckabfall von 1 bar bei einem Vordruck von 6 bar in einer bestimmten Richtung durch ein Gerät strömt, kann hier erhöht werden.

Beim erfindungsgemäßen Durchflussmessgerät ergeben sich somit durch die stirnseitige Anordnung von Ultraschallwandlern am Messrohr gute Messergebnisse, während gleichzeitig auch ein einfaches Anschließen des Durchflussmessgeräts an eine Rohrleitung möglich ist.

Vorzugsweise schneidet eine Achse des Messrohrs eine durch die Anschlussrohre und die Rohrleitung gebildete gemeinsame Achse. Weiterhin kann jeweils ein Anschlussrohr seitlich an einem jeweiligen Ende des Messrohrs um die Länge des Messrohrs voneinander versetzt auf gegenüberliegenden Seiten des Messrohrs angeordnet sein.

Vorzugsweise schneidet die Achse des Messrohrs die Achse der Anschlussrohre und der Rohrleitung unter einem Winkel von etwa 30°.

Zwischen den jeweiligen Anschlussrohren und dem Messrohr ist insbesondere ein jeweiliges Verbindungsrohr ausgebildet, dessen Achse senkrecht zur Achse des Messrohrs angeordnet ist.

An den jeweiligen Anschlussrohren sind zum einfachen Anschließen des Durchflussmessgeräts an die Rohrleitung Anschlusseinrichtungen vorgesehen, die beispielsweise Überwurfmuttern sein können.

Das Durchflussmessgerät ist vorteilhaft punktsymmetrisch zum Schnittpunkt der Achse der Anschlussrohre und der Achse des Messrohrs ausgebildet. Es ist insbesondere aus zwei gleichen Halbteilen ausgebildet, die durch Spritzgießen hergestellt sind und dann nach einem Drehen eines der Halbteile in Bezug auf das andere der Halbteile um die Achse des Messrohrs um 180° an einer Schweißnaht verschweißt sind. Somit kann das Durchflussmessgerät gemäß der vorliegenden Erfindung auf einfache Weise hergestellt werden. Insbesondere können durch den symmetrischen Aufbau des Durchflussmessgeräts Arbeitsschritte bei seiner Herstellung eingespart werden.

Das Durchflussmessgerät weist ein Gehäuse auf, das vorzugsweise aus PVDF, PFA und/oder PTFE besteht. Weiterhin ist es für spezielle Anwendungsfälle möglich, dass das Gehäuse aus einem Außenkörper, vorzugsweise aus PVDF, und einem Innenkörper, vorzugsweise aus PFA, besteht.

Die Anschlussrohre bilden jeweils ein Einlassrohr und ein Auslassrohr. Die Ultraschallwandler sind jeweils als Sende/Empfangseinheiten ausgebildet. Weiterhin weisen die Ultraschallwandler Piezoelemente auf.

Des weiteren sind Befestigungseinrichtungen zum Fixieren des Durchflussmessgeräts in seiner Betriebsstellung vorgesehen.

Eine Bedienungs- und Schnittstellen-Elektronik und/oder eine Auswerteelektronik kann an dem Durchflussmessgerät oder extern angeordnet sein.

Die Medien können Flüssigkeiten, Gase oder 2-Phasen-Strömungen sein.

Durch die Ausgestaltung des Durchflussmessgeräts mit spezieller Anordnung von Anschlussrohren in Bezug auf das Messrohr und auch in Bezug auf die Rohrleitung können Messergebnisse verbessert werden. Ein Anschließen an eine Rohrleitung kann vereinfacht werden. Weiterhin wird ein benötigter Einbauraum verringert.

Die angegebenen und weitere Merkmale und Einzelheiten der Erfindung werden einem Fachmann auf dem Gebiet aus der folgenden detaillierten Beschreibung und der beigefügten Zeichnung klarer, die Merkmale der vorliegenden Erfindung anhand eines Beispiels darstellt und wobei:
- Fig. 1: eine Längsschnittansicht des Durchflussmessgeräts gemäß einer bevorzugten Ausführungsform der Erfindung zeigt;
- Fig. 2: eine Längsschnittansicht des Durchflussmessgeräts gemäß einer weiteren bevorzugten Ausführungsform der Erfindung zeigt;
- Fig. 3: eine Schrägansicht des Durchflussmessgeräts zusammen mit einem Elektronikgehäuse gemäß der bevorzugten Ausführungsform der Erfindung zeigt; und
- Fig. 4: eine Schrägansicht des Durchflussmessgeräts ohne Elektronikgehäuse gemäß der bevorzugten Ausführungsform der Erfindung zeigt.

Im folgenden wird die vorliegende Erfindung anhand bevorzugter Ausführungsformen unter Bezugnahme auf die beigefügte Zeichnung detailliert erklärt.

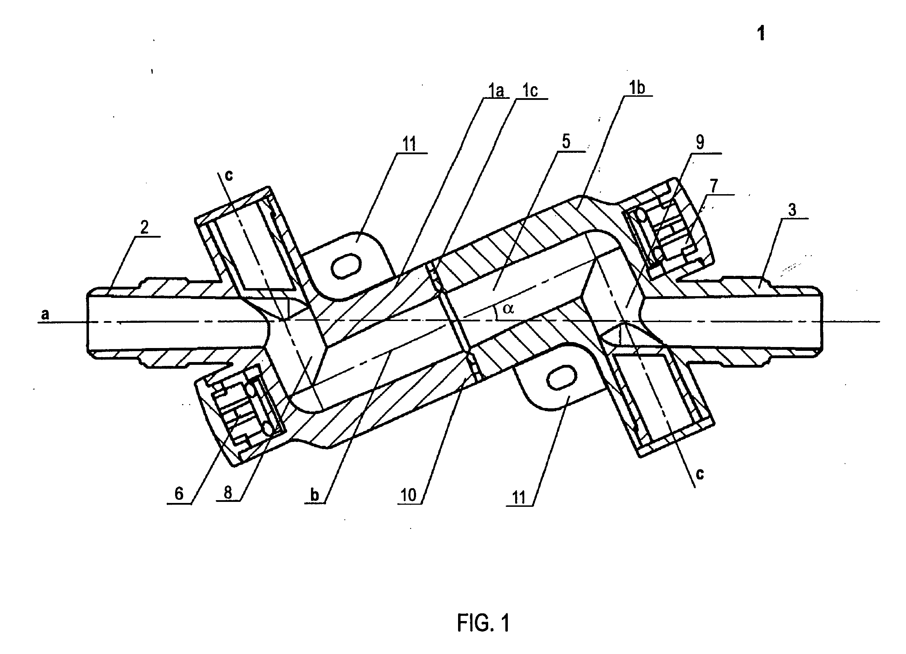

Fig. 1 zeigt einen Längsschnitt einer bevorzugten Ausführungsform des erfindungsgemäßen Durchflussmessgeräts 1, welches Anschlussrohre 2 und 3 mit einer zugehörigen Achse a und ein Messrohr 5 mit einer zugehörigen Achse b aufweist.

An die Anschlussrohre 2 und 3 kann eine Rohrleitung angeschlossen werden, in der ein Medium fließt, dessen Strömungsgeschwindigkeit durch das Durchflussmessgerät 1 gemessen werden soll. Sie sind jeweils als Einlassrohr und Auslassrohr zu verwenden. Das jeweilige Anschließen der Anschlussrohre 2 und 3 an die Rohrleitung kann auf einfache Weise durch Vorsehen von Anschlusseinrichtungen, wie beispielsweise Überwurfmuttern, an ihnen erfolgen. Die Anschlussrohre 2 und 3 haben im angeschlossenen Zustand des Durchflussmessgeräts eine gemeinsame Achse a mit der Rohrleitung. Das Medium kann beispielsweise Flüssigkeit, Gas oder eine 2-Phasen-Strömung sein.

Das Messrohr 5 ist derart geneigt, dass an seinen jeweiligen Stirnseiten ein Ultraschallwandler 6 bzw. 7 angeordnet ist. Diese Anordnung der Ultraschallwandler 6 und 7 am Messrohr 5 ist besonders gut zum Messen von Strömungsgeschwindigkeiten geeignet. Insbesondere sind die Ultraschallwandler 6 und 7 jeweils als Sende/Empfangseinheiten ausgebildet. Sie weisen vorzugsweise Piezoelemente auf.

In der Fig. 1 ist zu erkennen dass die Achse b des Messrohrs 5 die Achse a der Anschlussrohre 2 und 3 (und somit der Rohrleitung) schneidet. Der Schnittwinkel α beträgt vorzugsweise 30°.

Im Durchflussmessgerät 1 ist zwischen den jeweiligen Anschlussrohren 2 und 3 und dem Messrohr 5 jeweils ein Verbindungsrohr 8 und 9 ausgebildet. Die Verbindungsrohre 8 und 9 haben jeweils eine Achse c, die senkrecht zur Achse b des Messrohrs 5 steht. Der Strömungsweg für das zu messende Medium im Durchflussmessgerät 1 erstreckt sich beispielsweise durch das Anschlussrohr 2, das Verbindungsrohr 8, das Messrohr 5, das Verbindungsrohr 9 und das Anschlussrohr 3. Es ist aus der Fig. 1 zu erkennen, dass es nur sehr geringe Strömungsumlenkungen im Strömungsweg gibt.

Weiterhin ist aus der Fig. 1 gut zu erkennen, dass das Durchflussmessgerät 1 punktsymmetrisch zum Schnittpunkt der Achse a der Anschlussrohre 2 und 3 und der Achse b des Messrohrs 5 ausgebildet ist. Das Durchflussmessgerät 1 weist zwei gleiche Halbteile Ia und Ib auf, wobei die beiden Halbteile Ia und Ib an einer Schweißnaht 1 c miteinander verschweißt sind.

Diese herstellungstechnisch vorteilhafte symmetrische Ausgestaltung ergibt sich insbesondere dadurch, dass das Durchflussmessgerät 1 aus zwei gleichen Teilen besteht, die durch Spritzgießen aus Kunststoff hergestellt werden. Halterungen, die bei diesem Spritzgießen verwendet werden, sind noch bei den jeweiligen Achsen c der Verbindungsrohre 8 und 9 am Gehäuse 10 des Durchflussmessgeräts 1 zu sehen. In diese Halterungen werden Verschlussstopfen eingebracht und dann durch Stopfenabdeckungen abgedeckt. Das für das Gehäuse 1 verwendete Material ist insbesondere Kunststoffmaterial, wie beispielsweise PVDF, PFA und/oder PTFE.

Nach der Herstellung der beiden gleichen Teile wird eines der Halbteile 1 a in Bezug auf das andere der Halbteile 1 b um die Achse b des Messrohrs 5 um 180° gedreht und dann unter Ausbildung der Schweißnaht 1 c miteinander verschweißt. Durch den symmetrischen Aufbau kann das Durchflussmessgerät 1 auf einfache Weise und kostengünstig hergestellt werden.

In der Fig. 1 sind weiterhin noch Befestigungseinrichtungen 11 in Form von Ansätzen mit jeweils einem Loch bzw. sind Laschen am Gehäuse 10 bzw. an der Außenseite des Messrohrs 5 zu sehen, mittels welchen das Durchflussmessgerät 1 in einem eingebauten Zustand, d.h. angeschlossen an eine Rohrleitung, fixiert werden kann. Es können jedoch auch andere oder weitere Befestigungseinrichtungen vorgesehen sein.

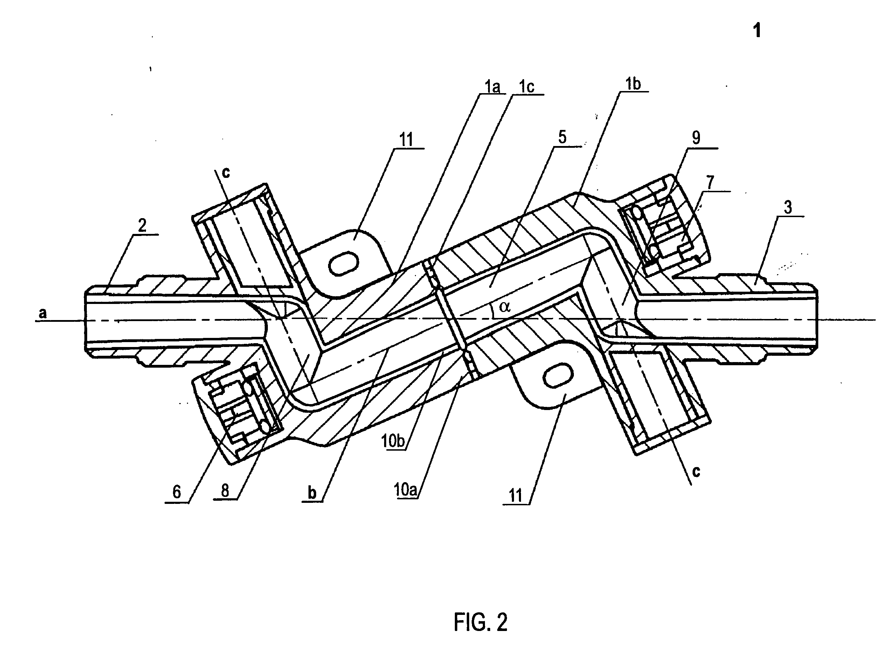

Fig. 2 zeigt eine Längsschnittansicht einer weiteren bevorzugten Ausführungsform des erfindungsgemäßen Durchflussmessgeräts 1. Das Durchflussmessgerät 1 der Fig. 2 unterscheidet sich von dem in Fig. 1 gezeigten Durchflussmessgerät lediglich dadurch, dass das in Fig. 1 gezeigte Gehäuse 10 als Außenkörper 10a und Innenkörper 10b ausgebildet ist. Alle übrigen Elemente sind gleich den Elementen der Fig. 1 und sind mit denselben Bezugszeichen wie in Fig. 1 bezeichnet.

Das Durchflussmessgerät 1 der Fig. 2 hat einen Außenkörper 10a aus einem hochfesten Material, wie beispielsweise einem Kunststoffmaterial auf Polyvinylidenfluorid-Basis, kurz PVDF genannt, und einen Innenkörper 10b aus einem hochreinen und hochbeständigen Material, wie beispielsweise einem Kunststoffmaterial auf Perfluoralkoxy-Basis, kurz PFA genannt. Der Innenkörper 10b entspricht dabei einer Schicht an der Innenwand des Gehäuses und bietet einen Schutz für das Gehäuse vor chemisch aggressiven Medien, die durch das Durchflussmessgerät 1 fließen können. Der den Innenkörper 10b umgebende Außenkörper 10a hat die erforderliche Festigkeit zum Abstützen des Innenkörpers 10b. An diesem Außenkörper 10a sind die Befestigungseinrichtungen 11 zum Fixieren des Durchflussmessgeräts 1 und die Anschlusseinrichtungen, bei spielsweise in Form von Überwurfmuttern, zum Anschließen des Durchflussmessgeräts 1 an eine Rohrleitung vorgesehen.

Bei der Herstellung des Durchflussmessgeräts 1 der Fig. 2 wird zuerst der Innenkörper 10b gespritzt, der in eine Form eingelegt wird, wonach auf ihn der Außenkörper 10a gespritzt wird.

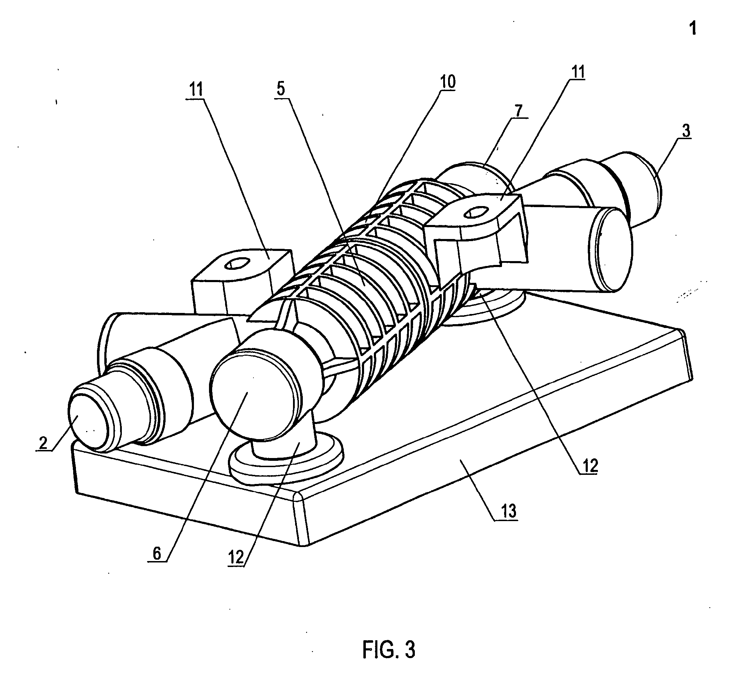

Wendet man sich nun der Fig. 3 zu, zeigt diese eine Schrägansicht des Durchflussmessgeräts 1 gemäß der bevorzugten Ausführungsform der Erfindung. Das Durchflussmessgerät 1 ist dabei zusammen mit einem mit ihm verbundenen Elektronikgehäuse 13 für eine Bedienungs- und Schnittstellen-Elektronik und/oder eine Auswerteelektronik gezeigt. Zur mechanischen und elektrischen Verbindung des Durchflussmessgeräts 1 mit dem Elektronikgehäuse 13 sind Elektronikanschlüsse 12 am Durchflussmessgerät 1 vorgesehen.

Im Übrigen sind in Fig. 3 das Gehäuse 10 des Durchflussmessgeräts 1, das Messrohr 5, die stirnseitig eingebauten Ultraschallwandler 6 und 7, die Anschlussrohre 2 und 3 und die Befestigungseinrichtungen 11 gezeigt. Die Befestigungseinrichtungen 11 können alternativ zu der gezeigten Ausführungsform auch am Elektronikgehäuse 13 angeordnet sein. Somit zeigt die Fig. 3 eine Ansicht des Durchflussmessgeräts 1 gemäß der Erfindung, wie es zur Messung eingesetzt werden kann.

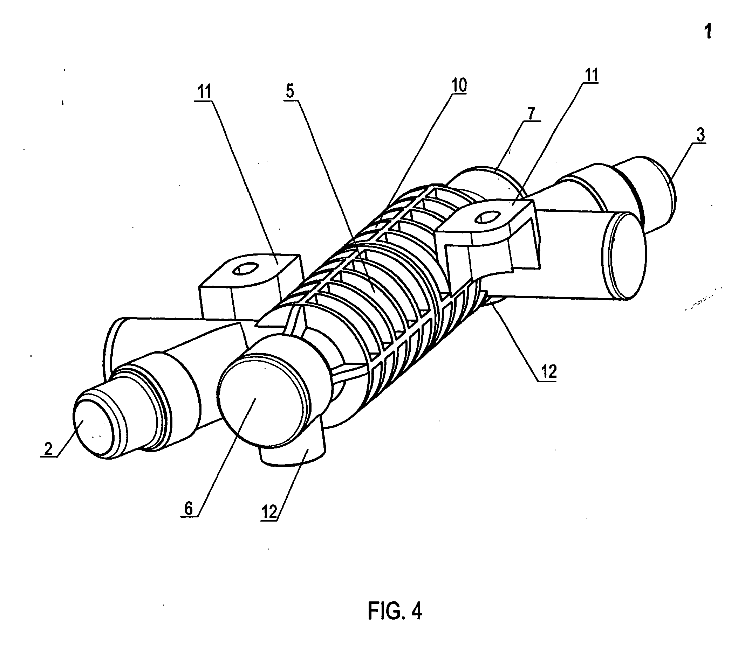

Fig. 4 zeigt eine alternative Ausgestaltung des in Fig. 3 gezeigten Durchflussmessgeräts 1. Gemäß der Ausgestaltung der Fig. 4 sind die Elektronikanschlüsse 12 nicht mit einem Elektronikgehäuse verbunden und sind als Kabelanschlüsse zum Anschluss an ein externes Elektronikgehäuse vorgesehen.

Durch das Durchflussmessgerät gemäß der vorliegenden Erfindung ergeben sich insbesondere die folgenden Vorteile:

Die Strömungsführung erfolgt insbesondere zwischen einer Rohrleitung und einem Anschlussrohr mit nur geringer Strömungsumlenkung. Dadurch kann ein Kv-Wert, insbesondere im Anschlussbereich zu einer Rohrleitung, erhöht werden.

Durch stirnseitiges Anordnen der Messwandler am Messrohr ergeben sich gute Ergebnisse für die Messung einer Strömungsgeschwindigkeit und daraus resultierend einer Durchflussmenge von in einer Rohrleitung fließenden Medien.

Ein Einbauen des Durchfiussmessgeräts ist einfach und ein benötigter Einbauraum ist, auch aufgrund der Ausgestaltung des Durchflussmessgeräts in Flachbauweise, klein.

Durch den symmetrischen Aufbau des Durchflussmessgeräts kann seine Herstellung vereinfacht und kostengünstiger werden.

Durch die vorliegende Erfindung wird somit ein Durchflussmessgerät mit einfachem Aufbau zur Verfügung gestellt, durch welches insbesondere eine Strömungsgeschwindigkeit von Medien durch Rohrleitungen genau gemessen werden kann und welches auf einfache Weise an eine Rohrleitung angeschlossen werden kann.

## Patentansprüche

1. Durchflussmessgerät (1) zum Messen der Strömungsgeschwindigkeit von in einer Rohrleitung fließenden Medien, das ein Messrohr (5) mit einer Längsachse (b) aufweist, an dessen beiden Stirnseiten jeweils ein Ultraschallwandler (6, 7) angeordnet ist, und Anschlussrohre (2, 3) zur Integration des Durchflussmessgeräts (1) in die und axial zur Rohrleitung vorgesehen sind, wobei das Durchflussmessgerät (1) aus zwei gleichen Halbteilen (1 a, 1 b) ausgebildet ist, **dadurch gekennzeichnet, dass**, die Halbteile (1 a, 1 b) Spritzgussteile sind und dass die Halbteile (1 a, 1 b) punktsymmetrisch derart miteinander verschweißt sind, dass die Schweißnaht (1c) senkrecht zur Achse (b) steht.

2. Durchflussmessgerät nach Anspruch 1, **dadurch gekennzeichnet, dass** eine Achse (b) des Messrohrs (5) eine durch die Anschlussrohre (2, 3) und die Rohrleitung gebildete gemeinsame Achse (a) schneidet.

3. Durchflussmessgerät nach Anspruch 1 oder 2, **dadurch gekennzeichnet, dass** jeweils ein Anschlussrohr (2, 3) seitlich an den jeweiligen Enden des Messrohrs (5) auf gegenüberliegenden Seiten des Messrohrs (5) angeordnet ist, und die Anschlussrohre (2, 3) einen Abstand zueinander aufweisen, der der Länge des Messrohrs (5) entspricht.

4. Durchflussmessgerät nach einem der Ansprüche 2 bis 3, **dadurch gekennzeichnet, dass** die Achse (b) des Messrohrs (5) die Achse (a) der Anschlussrohre (2, 3) und der Rohrleitung unter einem Winkel (α) von etwa 30° schneidet.

5. Durchflussmessgerät nach einem der Ansprüche 2 bis 4, **dadurch gekennzeichnet, dass** zwischen den jeweiligen Anschlussrohren (2, 3) und dem Messrohr (5) ein jeweiliges Verbindungsrohr (8, 9) ausgebildet ist, dessen Achse (c) senkrecht zur Achse (b) des Messrohrs (5) angeordnet ist.

6. Durchflussmessgerät nach einem der vorhergehenden Ansprüche, **dadurch gekennzeichnet, dass** an den jeweiligen Anschlussrohren (2, 3) zum Anschließen des Durchflussmessgeräts (1) an die Rohrleitung Anschlusseinrichtungen vorgesehen sind.

7. Durchflussmessgerät nach einem der Ansprüche 2 bis 6, **dadurch gekennzeichnet, dass** es punktsymmetrisch zum Schnittpunkt der Achse (a) der Anschlussrohre (2, 3) und der Achse (b) des Messrohrs (5) aus-gebildet ist.

8. Durchflussmessgerät nach einem der vorhergehenden Ansprüche, **dadurch gekennzeichnet, dass** es aus Kunststoffmaterial, wie beispielsweise aus PVDF, PFA und/oder PTFE, besteht.

9. Durchflussmessgerät nach einem der vorhergehenden Ansprüche, **dadurch gekennzeichnet, dass** es einen Außenkörper (10a), vorzugsweise aus PVDF, und einen Innenkörper (10b), vorzugsweise aus PFA, aufweist.

10. Durchflussmessgerät nach einem der vorhergehenden Ansprüche, **dadurch gekennzeichnet, dass** die Anschlussrohre (2, 3) jeweils ein Einlassrohr (2) und ein Auslassrohr (3) aufweisen.

11. Durchflussmessgerät nach einem der vorhergehenden Ansprüche, **dadurch gekennzeichnet, dass** die Ultraschallwandler (6, 7) jeweils als Sende/Empfangseinheiten ausgebildet sind.

12. Durchflussmessgerät nach einem der vorhergehenden Ansprüche, **dadurch gekennzeichnet, dass** die Ultraschallwandler (6, 7) Piezoelemente aufweisen.

13. Durchflussmessgerät nach einem der vorangehenden Ansprüche, **dadurch gekennzeichnet, dass** Befestigungseinrichtungen (11) zum Fixieren des Durchflussmessgeräts (1) vorgesehen sind.

14. Durchflussmessgerät nach einem der vorhergehenden Ansprüche, **dadurch gekennzeichnet, dass** ein Elektronikgehäuse (13) mit Bedienungs- und Schnittstellen-Elektronik und/oder Auswerteelektronik am Durchflussmessgerät (1) vorgesehen ist, wobei am Durchflussmessgerät (1) Elektronikanschlüsse (12) zur elektrischen und mechanischen Verbindung des Durchflussmessgeräts (1) mit dem Elektronikgehäuse (13) vorgesehen sind.

15. Durchflussmessgerät nach einem der Ansprüche 1 bis 14, **dadurch gekennzeichnet, dass** ein Elektronikgehäuse (13) mit Bedienungs- und Schnittstellen-Elektronik und/oder Auswerteelektronik extern vom Durchflussmessgerät (1) angeordnet ist, wobei am Durchflussmessgerät (1) Elektronikanschlüsse (12) als Kabelanschlüsse zur elektrischen Verbindung des Durchflussmessgeräts (1) mit dem externen Elektronikgehäuse (13) vorgesehen sind.

## Claims

1. A flowmeter (1) for measuring the flow speed of media flowing in a pipeline, the flowmeter having a measurement tube (5) with a longitudinal axis (b), on both face ends of which measurement tube a respective ultrasonic transducer (6, 7) is located, and connecting tubes (2, 3) for integration of the flowmeter (1) into and axially relative to the pipeline, and the flowmeter (1) being embodied of two identical half sections (1a, 1b), **characterized in that** the half sections (1a, 1b) are injection-molded parts, and that the half sections (1a, 1b) are welded to one another point-symmetrically in such a way that the weld seam (1c) is perpendicular to the axis (b).

2. The flowmeter of claim 1, **characterized in that** an axis (b) of the measurement tube (5) intersects a common axis (a) formed by the connecting tubes (2, 3) and the pipeline.

3. The flowmeter of claim 1 or 2, **characterized in that** one connecting tube (2, 3) each is located laterally on the respective ends of the measurement tube (5), on opposite sides of the measurement tube (5), and the connecting tubes (2, 3) have a spacing from one another that is equivalent to the length of the measurement tube (5).

4. The flowmeter of one of claims 2 through 3, **characterized in that** the axis (b) of the measurement tube (5) intersects the axis (a) of the connecting tubes (2, 3) and of the pipeline at an angle (α) of approximately 30°.

5. The flowmeter of one of claims 2 through 4, **characterized in that** between the respective connecting tubes (2, 3) and the measurement tube (5), a respective communicating tube (8, 9) is embodied, the axis (c) of which is located perpendicular to the axis (b) of the measurement tube (5).

6. The flowmeter of one of the foregoing claims, **characterized in that** connection devices are provided on the respective connecting tubes (2, 3) for connecting the flowmeter (1) to the pipeline.

7. The flowmeter of one of claims 2 through 6, **characterized in that** it is embodied point-symmetrically with the intersection of the axis (a) of the connecting tubes (2, 3) and the axis (b) of the measurement tube (5).

8. The flowmeter of one of the foregoing claims, **characterized in that** it comprises plastic material, such as PVDF, PFA and/or PTFE.

9. The flowmeter of one of the foregoing claims, **characterized in that** it has an outer body (10a), preferably of PVDF, and an inner body (10b), preferably of PFA.

10. The flowmeter of one of the foregoing claims, **characterized in that** the connecting tubes (2, 3) each have an inlet tube (2) and an outlet tube (3).

11. The flowmeter of one of the foregoing claims, **characterized in that** the ultrasonic transducers (6, 7) are each embodied as transmission/reception units.

12. The flowmeter of one of the foregoing claims, **characterized in that** the ultrasonic transducers (6, 7) have piezoelectric elements.

13. The flowmeter of one of the foregoing claims, **characterized in that** fastening devices (11) for the fixation of the flowmeter (1) are provided.

14. The flowmeter of one of the foregoing claims, **characterized in that** an electronics housing (13) with user-control and interface electronics and/or evaluation electronics is provided on the flowmeter (1), and electronic terminals (12) for electrical and mechanical connection of the flowmeter (1) to the electronics housing (13) are provided on the flowmeter (1).

15. The flowmeter of one of claims 1 through 14, **characterized in that** an electronics housing (13) with operator control and interface electronics and/or evaluation electronics is located externally of the flowmeter (1), and electronic terminals (12) as cable connections are provided on the flowmeter (1) for electrically connecting the flowmeter (1) to the external electronics housing (13).

## Revendications

1. Débitmètre (1) pour mesurer la vitesse d'écoulement de milieux s'écoulant dans une conduite, qui comprend un tube de mesure (5) ayant un axe longitudinal (b) sur les deux faces frontales duquel est disposé respectivement un transducteur ultrasonore (6, 7), et des tuyaux de raccordement (2, 3) étant prévus pour intégrer ledit débitmètre (1) à la conduite et axialement par rapport à celle-ci, le débitmètre (1) étant réalisé de deux demi-pièces (1a, 1b) identiques, **caractérisé par le fait que** les demi-pièces (1a, 1b) sont des pièces moulées par injection et que les demi-pièces (1a, 1b) sont soudées entre elles à symétrie ponctuelle de telle sorte que la soudure (1c) est située perpendiculairement à l'axe (b).

2. Débitmètre selon la revendication 1, **caractérisé par le fait qu'**un axe (b) du tube de mesure (5) coupe un axe (a) commun formé par les tuyaux de raccordement (2, 3) et la conduite.

3. Débitmètre selon la revendication 1 ou 2, **caractérisé par le fait que** respectivement un tuyau de raccordement (2, 3) est disposé latéralement aux extrémités respectives du tube de mesure (5) sur des côtés opposés du tube de mesure (5), et les tuyaux de raccordement (2, 3) présentent une distance l'un de l'autre qui correspond à la longueur du tube de mesure (5).

4. Débitmètre selon l'une quelconque des revendications 2 à 3, **caractérisé par le fait que** l'axe (b) du tube de mesure (5) coupe l'axe (a) des tuyaux de raccordement (2, 3) et de la conduite à un angle (α) de 30° à peu près.

5. Débitmètre selon l'une quelconque des revendications 2 à 4, **caractérisé par le fait qu'**un tube de liaison (8, 9) respectif dont l'axe (c) est disposé perpendiculairement à l'axe (b) du tube de mesure (5) est réalisé entre les tuyaux de raccordement (2, 3) respectifs et le tube de mesure (5).

6. Débitmètre selon l'une quelconque des revendications précédentes, **caractérisé par le fait que** des dispositifs de raccordement sont prévus sur les tuyaux de raccordement (2, 3) respectifs pour raccorder le débitmètre (1) à la conduite.

7. Débitmètre selon l'une quelconque des revendications 2 à 6, **caractérisé par le fait qu'**il est réalisé à symétrie ponctuelle par rapport au point d'intersection de l'axe (a) des tuyaux de raccordement (2, 3) et de l'axe (b) du tube de mesure (5).

8. Débitmètre selon l'une quelconque des revendications précédentes, **caractérisé par le fait qu'**il est réalisé en matière plastique, comme par exemple en PVDF, en PFA et/ou en PTFE.

9. Débitmètre selon l'une quelconque des revendications précédentes, **caractérisé par le fait qu'**il présente un corps extérieur (10a), de préférence en PVDF, et un corps intérieur (10b), de préférence en PFA.

10. Débitmètre selon l'une quelconque des revendications précédentes, **caractérisé par le fait que** les tuyaux de raccordement (2, 3) présentent chacun un tuyau d'admission (2) et un tuyau d'évacuation (3).

11. Débitmètre selon l'une quelconque des revendications précédentes, **caractérisé par le fait que** les transducteurs ultrasonores (6, 7) sont réalisés chacun comme unités émettrices-réceptrices.

12. Débitmètre selon l'une quelconque des revendications précédentes, **caractérisé par le fait que** les transducteurs ultrasonores (6, 7) présentent des éléments piézoélectriques.

13. Débitmètre selon l'une quelconque des revendications précédentes, **caractérisé par le fait que** des dispositifs de fixation (11) pour fixer le débitmètre (1) sont prévus.

14. Débitmètre selon l'une quelconque des revendications précédentes, **caractérisé par le fait qu'**un boîtier électronique (13) ayant une électronique de commande et d'interface et/ou une électronique d'évaluation est prévu sur le débitmètre (1), dans lequel des raccords d'électronique (12) étant prévus sur le débitmètre (1) pour relier de façon électrique et mécanique le débitmètre (1) audit boîtier électronique (13).

15. Débitmètre selon l'une quelconque des revendications 1 à 14, **caractérisé par le fait qu'**un boîtier électronique (13) ayant une électronique de commande et d'interface et/ou une électronique d'évaluation est disposé de façon externe au débitmètre (1), sur le débitmètre (1) étant prévus des raccords d'électronique (12) en tant que raccords de câble pour relier électriquement le débitmètre (1) audit boîtier électronique (13) externe.
